Europäisches Patentamt

European Patent Office

Office européen des brevets

(11) Veröffentlichungsnummer: **0 232 514 B1**

(12) **EUROPÄISCHE PATENTSCHRIFT**

(12)

(45) Veröffentlichungstag der Patentschrift: **21.11.91**

(21) Anmeldenummer: **86117234.4**

(22) Anmeldetag: **10.12.86**

(51) Int. Cl.⁵: **G01L 1/26**, G01L 1/22, G01G 3/14, G01G 21/23

(54) **Kraftmesseinrichtung.**

(30) Priorität: **18.12.85 DE 3544885**

(43) Veröffentlichungstag der Anmeldung: **19.08.87 Patentblatt 87/34**

(45) Bekanntmachung des Hinweises auf die Patenterteilung: **21.11.91 Patentblatt 91/47**

(84) Benannte Vertragsstaaten: **BE CH FR GB LI NL SE**

(56) Entgegenhaltungen:
**DE-A- 1 290 360      DE-A- 2 257 009
DE-A- 2 546 890      DE-A- 2 735 016
DE-A- 3 307 574      US-A- 4 483 404
US-A- 4 554 987**

(73) Patentinhaber: **Pfister GmbH
Stätzlinger Strasse 70
W-8900 Augsburg(DE)**

(72) Erfinder: **Barten, Hans
Terlanerstrasse 19
W-8901 Friedberg(DE)**

(74) Vertreter: **Kahler, Kurt, Dipl.-Ing.
Postfach 1249 Gerberstrasse 3
W-8948 Mindelheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Kraftmeßeinrichtung gemäß dem Oberbegriff des Patentanspruchs 1.

Bei derartigen Kraftmeßeinrichtungen, nachstehend Kraftmeßzellen genannt, sind in einem verhältnismäßig starren Körper an Stellen verringerter Stärke Dehnungs- oder Scherungs-Meßstreifen aufgebracht. Diese können auch durch piezoelektrische oder piezoresistive Elemente ersetzt werden.

Wirkt eine zu messende Kraft nicht exakt senkrecht auf die Kraftmeßzelle, dann verfälscht die horizontale Kraftkomponente das Meßergebnis und kann die Kraftmeßzelle beschädigen. Bekannte Kraftmeßzellen haben eine verhältnismäßig große Bauhöhe, die durch die zusätzlich erforderlichen Abstützelemente für einen horizontalen Kraftausgleich noch vergrößert wird.

Die GB-A-2145831 beschreibt eine sich selbst ausrichtende Brückenplattform, die über Scherkraftgeber auf einer Unterlage abgestützt wird. An der Unterseite des Scherkraftgebers ist dabei eine zylindrische Öffnung angebracht, der ein besonders geformtes Schieberteil mit einer entsprechenden Öffnung gegenüberliegt. Dieses Schieberteil wird wiederum lose von einem Halter umfaßt, der an der Unterseite des Scherkraftgebers angeschraubt ist. Die Vertiefungen im Scherkraftgeber bzw. im Schieber sind etwa gleich, so daß sich ein verhältnismäßig großer Abstand zwischen der Unterseite des Scherkraftgebers und der Unterlage ergibt. Die besondere Formung des Abstützschiebers und dessen Halterung machen die Herstellung arbeits- und kostenaufwendig.

Ferner ist bei dieser bekannten Anordnung an jeder Ecke der Brückenplattform seitlich der den Scherungs-Meßstreifen tragende Körper einseitig biegeelastisch befestigt, wobei der Körper über ein einziges Abstützelement in dem Halter abgestützt ist. Bei unterschiedlicher Belastung der Brückenplattform ergeben sich unterschiedliche Biegemomente an der Verbindungsstelle zwischen Körper und Brückenplattform, wobei die Durchbiegung der Brücke zu Meßungenauigkeiten führt.

Der Erfindung liegt die Aufgabe zugrunde die Nachteile bekannter Kraftmeßeinrichtungen zu beseitigen oder zumindest zu verringern. Insbesondere soll bei einfachstem Aufbau und kostengünstiger Herstellung eine sehr kompakte Kraftmeßeinrichtung mit sehr niedriger Bauhöhe geschaffen werden, die gegen Querkräfte verhältnismäßig unempfindlich ist.

Diese Aufgabe wird gemäß der Erfindung gelöst durch eine Kraftmeßeinrichtung mit den Merkmalen des Patentanspruchs 1.

Bevorzugte Weiterbildungen der erfindungsgemäßen Kraftmeßeinrichtung sind in den abhängigen Ansprüchen gekennzeichnet.

Die erfindungsgemäße Kraftmeßeinrichtung besitzt folgende Vorteile:

Durch die Integration der beweglichen Abstützteile ergibt sich eine äußerst kompakte Einrichtung mit niedriger Bauhöhe. Der Materialeinsatz und der Herstellungsaufwand ist auf Grund der geringen Anzahl einfacher Teile niedrig und trotzdem wird die Genauigkeit eingehalten.

Der Einbau ist bei beliebiger Anwendung problemlos; auch lassen sich bei dem erfindungsgemäßen Aufbau mehrere Kraftmeßzellen unterschiedlicher Nennlast auf einfache Weise in Reihe schalten. Vor allem Wird der Einfluß von Querkräften auf das Meßergebnis dadurch stark reduziert, daß die Zelle eine horizontale Bewegung zuläßt, durch die eine Rückstellkraft entsteht, die sich aus einer wählbaren Formgebung der Abstützglieder ergibt. Weitere Merkmale und Vorteile der vorliegenden Erfindung ergeben sich aus der nachfolgenden Beschreibung von Ausführungsbeispielen an Hand der Zeichnung. Es zeigen

Fig. 1     eine Seitenansicht einer Ausführungsform der erfindungsgemäßen Kraftmeßeinrichtung teilweise im Schnitt;

Fig. 2     eine Ansicht der Einrichtung nach Fig. 1 in Richtung des Pfeiles II in Fig. 1 und

Fig. 3     eine Schnittansicht längs der Linie III-III der Fig. 1

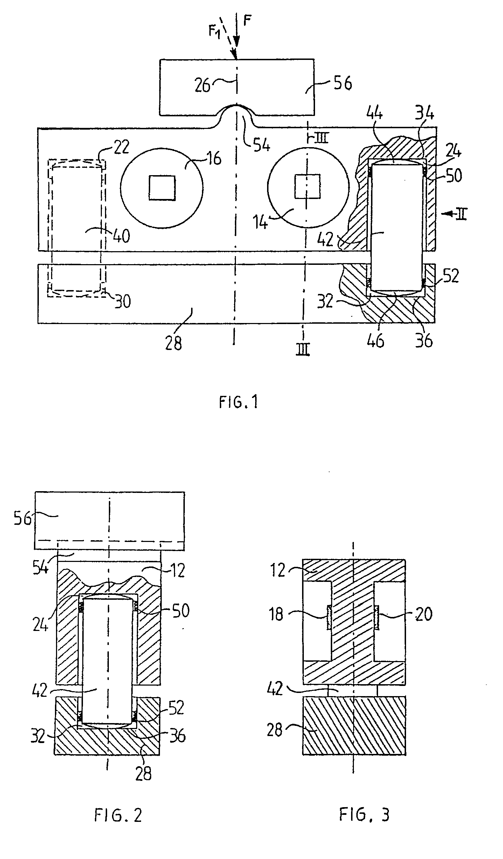

Die Figuren 1 bis 3 zeigen eine beispielsweise Ausführungsform einer erfindungsgemäßen Kraftmeßeinrichtung 10 mit einem verhältnismäßig starren Zentralkörper 12, der an Stellen 14, 16 eine erheblich verringerte Stärke aufweist, so daß sich im Schnitt gesehen bei dem an sich quaderförmigen Zentralkörper 12 ein Doppel-T-förmiger Querschnitt ergibt. An den senkrechten Flächen der Abschnitte 14, 16 sind Kraftmeßelemente beispielsweise Dehnungsmeßstreifen 18, 20 aufgebracht, die in bekannter Weise mit einer elektrischen Schaltung zu einer Wheatstone'schen Brücke verbunden sind.

Wesentlich ist nun die Abstützung des Zentralkörpers 12. Hierfür sind bei der länglichen quaderförmigen Ausbildung des Zentralkörpers 12 an dessen Unterseite zwei vornehmlich zylindrische Öffnungen 22, 24 gegenüberliegend in gleichem Abstand zur Symmetrieachse 26 der Kraftmeßeinrichtung im äußeren Bereich des Zentralkörpers 12 angebracht. Die Abschnitte 14 und 16 liegen dabei im inneren Bereich des Zentralkörpers 12.

In einer Abstützplatte 28 sind ausgerichtet zu den beiden Öffnungen 22, 24 entsprechende Öffnungen 30, 32 angebracht. Die Öffnungen 22, 24, 30, 32 besitzen bevorzugt einen ebenen horizontalen Boden, z.B. die Öffnung 24 einen Boden 34 und die Öffnung 32 einen Boden 36.

Die Abstützung des Zentralkörpers 12 auf der Abstützplatte 28 erfolgt nun erfindungsgemäß durch zylindrische Abstützelemente 40, 42 deren Durchmesser geringer ist als derjenige der Öffnungen, z.B. 24, so daß ein erhebliches Spiel der Abstützelemente in den Öffnungen gegeben ist. Die Differenz der Durchmesser kann in der Größenordnung von einigen Millimeter bis zu einem Zentimeter oder etwas darüber liegen.

Die Länge der Abstützelemente 40, 42 ist derart bemessen, daß sich in senkrechter Position ein geringer Abstand zwischen der Unterseite des Zentralkörpers 12 und der Oberseite der Abstützplatte 28 ergibt, der ebenfalls in der Größenordnung von ein oder mehreren Millimetern liegen kann.

Es ist zu beachten, daß die Öffnungen 22, 24 im Zentralkörper 12 wesentlich tiefer ausgebildet sind als die Öffnungen 30, 32 in der Abstützplatte 28, so daß letztere verhältnismäßig dünn ausgeführt werden kann, während die Höhe des Zentralkörpers 12 von der Tiefe der Öffnungen nicht beeinflußt wird.

Wesentlich für die erfindungsgemäße Kraftmeßeinrichtung ist ferner die kalottenförmig gewölbte Ausbildung der oberen und unteren Stirnflächen 44 bzw. 46 der Abstützelemente 40, 42. Die Krümmung dieser Stirnkalotten 44, 46 wird abhängig von der zu erwartenden Querbelastung und der gewünschten Rückstellkraft gewählt, wie dies später noch beschrieben wird. Insbesondere kann der Krümmungsradius in der Größenordnung der Höhe der Abstützelemente 40, 42 liegen.

Zur Zentrierung der Abstützelemente könnten deren Gegenflächen auch kalottenartig in der gleichen Richtung jedoch weniger stark gekrümmt sein, so daß die sich einstellende Rückstellkraft von der Differenz der Krümmungsdurchmesser bestimmt wird.

In einer weiteren Ausführung der Erfindung kann im Bereich der oberen und unteren Stirnkante der Abstützelemente 40, 42 je ein Zwischenring 50 bzw. 52 angeordnet sein, der im Wesentlichen spielfrei zwischen den Abstützelementen und den Öffnungen sitzt. Der Ring ist vorzugsweise elastisch und dient der Abdichtung und Zentrierung.

Für die Krafteinleitung auf die Oberfläche des Zentralkörpers 12 ist eine besondere Ausbildung der Krafteinleitungsstelle zum Zentralkörper 12 vorgesehen. Eine erste Ausführungsform dieser Einleitungsstelle zeigt Fig. 1 in Form einer leistenartigen Erhebung 54 mit rundem, etwa teilkreisförmigen Querschnitt, die sich zentral und quer zur Längsrichtung des Zentralkörpers 12 erstreckt und somit symmetrisch zu den Kraftmeßelementen 18, 20 und den Abstützelementen 40, 42 verläuft.

Anstelle der durchgehenden Leiste 54 der Fig. 1 kann auch eine entsprechende Vertiefung vorgesehen sein, in der ein zylinderförmiger Stab lagert, an dessen Oberseite wiederum die vertiefte Unterseite eines Krafteinleitungsteils anliegt. Der Stab kann auch durch zwei beabstandete Kugeln ersetzt werden. Eine andere Ausbildung der Krafteinleitungsstelle kann die Form einer Pfanne und eines an der Unterseite eines Krafteinleitungsteils angebrachten schneidenfömig ausgebildeten Druckstücks haben. Die Arbeitsweise der erfindungsgemäßen Kraftmeßeinrichtung ist wie folgt:

Wirkt auf das Krafteinleitungsteil 56 eine senkrechte Kraft F in Richtung der Symmetrieachse 26, so ergibt sich weder ein Verkanten des Krafteinleitungsteils 56 noch eine seitliche Beanspruchung des Zentralkörpers 12, so daß diese Kraft F eine symmetrische Beanspruchung des Zentralkörpers 12 verursacht, die mittels der Kraftmeßelemente 18, 20 festgestellt wird.

Wirkt eine Kraft $F_1$ schräg auf das Krafteinleitungsglied 56, so bewirkt die horizontale Komponente dieser Kraft ein Verschieben des Zentralkörpers 12 in Fig. 1 nach rechts, wobei die Kugelförmigen Stirnflächen 44, 46 auf den Böden 34 bzw. 36 abrollen und die Abstützelemente 40, 42 sich geringfügig schräg stellen. Auf Grund der Krümmung der kalottenförmigen Stirnflächen 44, 46 ergibt sich dabei eine Rückstellkraft, die in ihrer Größe vor allem durch den Grad der Krümmung, der Auslenkung und der Vertikalkraft bestimmt wird. Die horizontale Kraftkomponente bewirkt eine horizontale Bewegung des Zentralkörpers 12 bis die entstehende Rückstellkraft gleich groß ist und die gewünschte Vertikalkomponente wird mittels der Kraftmeßelemente 18, 20 richtig gemessen. Entfällt die horizontale Komponente der Kraft F1, dann kann sich die Einrichtung wieder in den Ruhezustand bewegen.

In horizontaler Richtung wird die Bewegung des Zentralkörpers 12 dadurch begrenzt, daß die Abstützelemente 40, 42 in ihren Öffnungen 22, 24, 30 32 in Zusammenwirken mit den elastischen Ringen 50, 52 einen elastischen Anschlag bilden, der die Horizontalverschiebung des Zentralkörpers 12 begrenzt.

Es sei darauf hingewiesen, daß die kalottenförmigen Stirnseiten 44, 46 der Abstützelemente 40, 42 durch zylinderförmige ersetzt werden können, falls die Rückstellkraft abhängig sein soll von der Bewegungsrichtung.

Andererseits läßt sich die Krafteinleitungsstelle auch punktförmig mit entsprechenden kalottenförmigen Vertiefungen und einer Kugel ausbilden. Dies kommt insbesondere dann in Frage wenn die Meßanordnung rotationssymmetrisch ausgebildet ist. Bei einer derartigen Ausbildung können dann auch entsprechend drei Abstützelemente verwendet werden, die auf einem Kreis im Winkelabstand von 120 ° angeordnet sind.

**Patentansprüche**

1. Kraftmeßeinrichtung mit einem verhältnismäßig starren Körper (12), bei dem an mindestens einer Stelle verringerter Stärke ein Dehnungs- oder Scherungsmeßelement (14, 16) aufgebracht ist, einer Basis (28) in geringem Abstand von dem Körper (12) und mindestens einem in gegenüberliegende Öffnungen (22, 24, 30, 32) in dem Körper (12) und in der Basis (28) eingesetzten, gekrümmte Auflagerflächen (44, 46) aufweisenden Abstützelement (40, 42), dessen Durchmesser geringer ist als der Innendurchmesser der Öffnungen (22, 24, 30, 32), dadurch gekennzeichnet, daß im Körper (12) selbst bei integrierter Kompaktbauweise der Kraftmeßeinrichtung in Zwei- bzw. Mehrfachanordnung symmetrisch zu einer zentralen Ebene bzw. rotationssymmetrisch um eine Achse in einem äußeren Bereich des Körpers (12) je ein Abstützelement (40, 42) und in einem inneren Bereich zwischen der Symmetrieebene bzw. -achse und dem entsprechenden Abstützelement (40, 42) je ein Dehnungs- oder Scherungsmeßelement (14, 16) angeordnet ist, daß die Öffnungen (22, 24) in dem Körper (12) wesentlich tiefer sind als diejenigen (30, 32) in der Basis (28) und daß eine leisten- bzw. punktförmige Krafteinleitungsvorrichtung (54, 56) auf der Oberseite des Körpers (12) im Bereich der Symmetrieebene bzw. -achse ausgebildet ist.

2. Einrichtung nach Anspruch 1, dadurch gekennzeichnet, daß die Öffnungen (22, 24, 30, 32) in dem Körper (12) bzw. der Basis (28) zylinderförmig und , die Abstützelemente (40, 42) zy- linderförmig und mit kalottenförmig ausgebil- deten Stirnflächen (44, 46) versehen sind.

3. Einrichtung nach Anspruch 1 oder 2, dadurch gekennzeichnet, daß der Krümmungsradius der gekrümmten Auflagerflächen in der Grö- ßenordnung des Abstandes gegenüberliegen- der Auflagerflächen ist.

4. Einrichtung nach einem der vorhergehenden Ansprüche, dadurch gekennzeichnet, daß zwischen den Seitenflächen der Abstützelemente (40, 42) und den Innenflächen der Öffnungen (22, 24, 30, 32) ein Spalt vorgesehen ist, in dem jeweils ein elastischer Ring (50, 52) in der Nähe der gekrümmten Auflagerflächen (44, 46) angeordnet ist.

5. Einrichtung nach einem der vorhergehenden Ansprüche, dadurch gekennzeichnet, daß der Körper (12) quaderförmig ist, daß an den gegenüberliegenden Enden des Körpers (12) je ein Abstützelement (40, 42) vorgesehen ist, und daß die unter Krafteinwirkung ihre Eigenschaft ändernden Elemente (14, 16) in einem Bereich zwischen den beiden Abstützelementen (40, 42) angeordnet sind.

6. Einrichtung nach einem der Ansprüche 1 bis 4, dadurch gekennzeichnet, daß bei rotationsförmig ausgebildeten Körper (12) mindestens drei auf einem Kreis in gleichem Winkelmäßigen Abstand angeordnete Abstützelemente (40, 42) vorgesehen sind.

7. Einrichtung nach einem der vorhergehenden Ansprüche, dadurch gekennzeichnet, daß die Krafteinleitungsstelle am Körper (12) als Zylinder-, (Doppel)- Kugel oder Pfannen/Schneidenlager ausgebildet ist.

8. Einrichtung nach einem der vorhergehenden Ansprüche, dadurch gekennzeichnet, daß der zwischen den Abstützelementen (40, 42) und den Öffnungen (20, 24, 30, 32) gebildete Spalt in der Größenordnung von einem oder mehreren Millimeter bis zu einem Zentimeter mißt.

9. Einrichtung nach einem der Ansprüche 1 bis 7, dadurch gekennzeichnet, daß der zwischen den Abstützelementen (40, 42) und den Öffnungen (22, 24, 30, 32) gebildete Spalt in der Größenordnung von 5 bis 30%, vorzugsweise 20% des Durchmessers der Abstützelemente ist, wobei die Höhe der Abstützelemente (40, 42) in der Größenordnung von dem 1- bis 5- fachen vorzugsweise 2- bis 3-fachen des Durchmessers liegt.

10. Einrichtung nach einem der vorhergehenden Ansprüche, dadurch gekennzeichnet, daß auch die den Auflagerflächen (44, 46) gegenüberliegenden Lagerflächen (34, 36) in den Öffnungen des Zentralkörpers (12) in der gleichen Richtung jedoch geringer als die Auflagerflächen (44, 46) gekrümmt sind.

## Claims

1. Force measuring device including a relatively rigid body (12) having at at least one position of reduced thickness a strain or shearing measuring element (14, 16) applied thereto, a base (28) arranged at small distance from the body (12), and at least one support element (40, 42) inserted in opposing recesses (22, 24, 30, 32) in the body (12) and the base (28), having curved supporting surfaces (44, 46) and a diameter smaller than the inner diameter of the recesses (22, 24, 30, 32), characterized in that in the body (12) as such in an integrated compact design of the force measuring device in a double or multiple arrangement, respectively, one support element (40, 42) each is arranged symmetrically to a central plain or rotationally symmetrically to an axis in an exterior region of the body (12), and one strain or shearing measuring element (14, 16) each is arranged in an interior region between the symmetry plain or axis respectively, and the corresponding support element (40, 42), that the recesses (20, 24) in the body (12) are essentially deeper than those (30, 32) in the base (28) and that a ledge or point type, respectively, force introduction means (54, 56) is formed at the top side of the body (12) in the region of the symmetry plain or axis, respectively.

2. Device of claim 1 characterized in that the recesses (22, 24, 30, 32) in the body (12) and the base (28) respectively, are cylindrical and the support elements (40, 42) are cylindrical and are provided with cap type formed end surfaces (44, 46).

3. Device of claim 1 or 2, characterized in that the curvature of the curved support surfaces are in the range of the distance of opposing support surfaces.

4. Device of any of the preceding claims, characterized in that between the side surfaces of the support elements (40, 42) and the inner surfaces of the recesses (22, 24, 30, 32) a gap is provided having arranged therein an elastic ring (50, 52) each in proximity to the curved support surfaces (44, 46).

5. Device of any of the preceding claims, characterized in that the body (12) is of cube type, that at the opposite ends of the body (12) there is provided one support element (40, 42), each and that the elements (14, 16) changing their characteristic upon force exertion are arranged in the region between the two support elements (40, 42).

6. Device of any of claims 1 to 4, characterized in that with a body (12) formed with rotational symmetry there being provided at least three support elements (40, 42) along a circle at equal angular distances.

7. Device of any of the preceding claims, characterized in that the force introduction position at the body (12) is formed as a cylinder, a (double) sphere or knife bearing.

8. Device of any of the preceding claims, characterized in that the gap formed between the support elements (40, 42) and the recesses (20, 24, 30, 32) is in the order of one or several millimeters up to one centimeter.

9. Device of any of the claims 1 to 7, characterized in that the gap formed between the support elements (40, 42) and the recesses (22, 24, 30, 32) is in the order of 5 to 30%, preferably 20% of the diameter of the support elements with the height of the support elements (40, 42) being in the range of one to five times, preferably two to three times of the diameter.

10. Device of any of the preceding claims, characterized in that the bearing surfaces (34, 36) opposing the support surfaces (44, 46) in the recesses of the central body (12) are curved in the same direction however to a lower extent than the bearing surfaces (44, 46).

**Revendications**

1. Dispositif dynamométrique, avec un corps relativement rigide (12) dans lequel est disposé, en au moins un endroit d'épaisseur réduite, un élément de mesure d'allongement ou de cisaillement (14,16), avec une base (28) à faible distance du corps (12), et avec au moins un élément de soutien (40,42), qui est introduit dans des ouvertures en vis-à-vis (22,24,30,32) du corps (12) et de la base (28), qui présente des faces d'appui courbes (44,46) et dont le diamètre est inférieur au diamètre intérieur des ouvertures (22,24,30,32), caractérisé en ce que, même en cas d'un mode de construction compact intégré du dispositif dynamométrique en un agencement double ou multiple, des éléments de soutien respectifs (40,42) sont disposés dans le corps (12), symétriquement par rapport à un plan central ou en symétrie de révolution autour d'un axe, dans une région extérieure du corps (12), et des éléments de mesure d'allongement ou de cisaillement respectifs (14,16) sont disposés dans une région intérieure du corps (12) comprise entre le plan ou l'axe de symétrie et l'élément de soutien correspondant (40,42), en ce que les ouvertures (22,24) dans le corps (12) sont nettement plus profondes que celles (30,32) dans la base (28), et en ce qu'un dispositif d'introduction de force en forme de barre ou de point (54,56) est configuré sur le dessus du corps (12), dans la région du plan ou selon le cas de l'axe de symétrie.

2. Dispositif selon la revendication 1, caractérisé en ce que les ouvertures (22,24,30,32) dans le corps (12) ou dans la base (28) sont cylindriques, et les éléments de soutien (40,42) sont de forme cylindrique et pourvus de faces frontales (44,46) configurées en forme de calottes.

3. Dispositif selon la revendication 1 ou 2, caractérisé en ce que le rayon de courbure des faces d'appui courbes correspond à la distance entre les faces d'appui en vis-à-vis.

4. Dispositif selon l'une des revendications précédentes, caractérisé en ce qu'une fente est prévue entre les faces frontales des éléments de soutien (40,42) et les faces intérieures des ouvertures (22,24,30,32), fente dans laquelle est disposé un anneau élastique respectif (50,52) au voisinage des faces d'appui courbes (44,46).

5. Dispositif selon l'une des revendications précédentes, caractérisé en ce que le corps (12) est parallélépipédique, en ce qu'un élément de soutien respectif (40,42) est prévu aux extrémités opposées du corps (12), et en ce que les éléments (14,16) qui modifient leurs caractéristiques sous l'action d'une force, sont disposés dans une région comprise entre les deux éléments de soutien (40,42).

6. Dispositif selon l'une des revendications 1 à 4, caractérisé en ce que, pour un corps (12) configuré à symétrie de révolution, au moins trois éléments de soutien (40,42) sont prévus, qui sont disposés sur un cercle avec des écartements angulaires identiques.

7. Dispositif selon l'une des revendications précédentes, caractérisé en ce que le point d'introduction de force sur le corps (12) est réalisé sous la forme d'un cylindre, d'une boule (double) ou d'un palier à poches/tranchants.

8. Dispositif selon l'une des revendications précédentes, caractérisé en ce que la fente formée entre les éléments de soutien (40,42) et les ouvertures (20,24,30,32) présente une dimension comprise entre un ou plusieurs millimètres et un centimètre.

9. Dispositif selon l'une des revendications 1 à 7, caractérisé en ce que la fente formée entre les éléments de soutien (40,42) et les ouvertures (22,24,30,32) est égale à 5 à 30% du diamètre des éléments de soutien, de préférence à 20%, la hauteur des éléments de soutien (40,42) correspondant à 1 à 5 fois le diamètre, de préférence 2 à 3 fois.

10. Dispositif selon l'une des revendications précédentes, caractérisé en ce que les faces de palier (34,36) dans les ouvertures du corps central (12), faces qui se trouvent en vis-à-vis des faces d'appui (44,46), sont elles-aussi courbes, dans la même direction que les faces d'appui (44,46) mais plus faiblement.

EP 0 232 514 B1

FIG.1

FIG.2

FIG.3

7